(19) Europäisches Patentamt
European Patent Office
Office européen des brevets

(11) **EP 4 068 025 A1**

(12) **EUROPÄISCHE PATENTANMELDUNG**

(43) Veröffentlichungstag:
**05.10.2022  Patentblatt 2022/40**

(21) Anmeldenummer: **21165783.8**

(22) Anmeldetag: **30.03.2021**

(51) Internationale Patentklassifikation (IPC):
**G05B 23/02** (2006.01)   **G05B 19/404** (2006.01)

(52) Gemeinsame Patentklassifikation (CPC):
**G05B 19/404;** G05B 23/0294; G05B 2219/41154;
G05B 2219/41161; G05B 2219/41163;
G05B 2219/49181

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Popp, Johannes**
**91052 Erlangen (DE)**
• **Schäfers, Elmar**
**90763 Fürth (DE)**

(54) **VERFAHREN UND SYSTEME ZUM ERMITTELN VON KOMPENSATIONSPARAMETERN**

(57)   Die Erfindung betrifft ein Verfahren zum Ermitteln von Kompensationsparametern (P1*, P2*), wobei die Kompensationsparameter (P1*, P2*) ein Kompensationssignal (K1*, K2*) festlegen, wobei das Kompensationssignal (K1*, K2*) dazu vorgesehen ist, zumindest eine Störung zu kompensieren, wobei die zumindest eine Störung im Betrieb eines Regelziels (MOT) auftritt, wobei das Regelziel (MOT) im Betrieb von einer Servoantrieb-Regeleinrichtung (SRE) geregelt wird, wobei die Servoantrieb-Regeleinrichtung (SRE) dazu eingerichtet ist, beim Auftreten der zumindest einen Störung anhand der Kompensationsparameter (P1*, P2*) das Kompensationssignal (K1*, K2*) zu generieren, um einen auf die Störung zurückzuführenden Folgefehler zu reduzieren, wobei ein erster Testparametersatz (P1) bereitgestellt wird; die Servoantrieb-Regeleinrichtung (SRE) veranlasst wird, einen Betriebsvorgang, bei dem die zumindest eine Störung auftritt, durchzuführen, wobei die Servoantrieb-Regeleinrichtung (SRE) bei dem Durchführen des Betriebsvorgangs basierend auf dem ersten Testparametersatz (P1) ein erstes Test-Kompensationssignal (K1) generiert und als Rückmeldung ein erstes Messsignal (MS1) erhält; aus dem ersten Messsignal (MS1) ein erstes Fehlersignal (eX(t)) ermittelt wird; die Kompensationsparameter (P1*) mittels eines Ersatzmodells (EM), wobei das Ersatzmodell (EM) Fehlersignale auf Kompensationssignale abbildet, und unter Verwendung des ersten Fehlersignals (eX(t)) ermittelt werden.

FIG 3

EP 4 068 025 A1

**Beschreibung**

Die Erfindung betrifft ein Verfahren zum Ermitteln von Kompensationsparametern, wobei die Kompensationsparameter ein Kompensationssignal festlegen, wobei das Kompensationssignal dazu vorgesehen ist, zumindest eine Störung zu kompensieren, wobei die zumindest eine Störung im Betrieb eines Regelziels vorzugsweise deterministisch auftritt, wobei das Regelziel, das z.B. eine Achse einer Werkzeugmaschine umfasst, im Betrieb von einer Servoantrieb-Regeleinrichtung geregelt wird, wobei die Servoantrieb-Regeleinrichtung dazu eingerichtet ist, beim Auftreten der zumindest einen Störung anhand der Kompensationsparameter das Kompensationssignal zu generieren, um einen auf die Störung zurückzuführenden Folgefehler zu reduzieren.

Darüber hinaus betrifft die Erfindung ein Verfahren zur Überwachung eines Regelziels.

Ferner betrifft die Erfindung ein System zur Ausführung der vorgenannten Verfahren.

Außerdem betrifft die Erfindung ein Computerprogramm mit den Befehlen, die bewirken, dass das vorgenannte System eines oder beide der vorgenannten Verfahren ausführt.

Obendrein betrifft die Erfindung ein computerlesbares Medium, auf dem das vorgenannte Computerprogramm gespeichert ist.

Verfahren und Systeme, bei welchen eine Kompensation bei einer Abweichung zwischen Soll- und Ist-Werten ausgelöst wird, sind hinlänglich bekannt. Tritt eine solche Abweichung auf, generiert die Servoantrieb-Regeleinrichtung typischerweise ein Kompensationssignal, welches auf ein Soll-Signal aufgeschaltet wird, um den Fehler zu kompensieren.

Im Zusammenhang mit der vorliegenden Erfindung wird unter dem Begriff Störung eine Störung verstanden, die auf einen physikalischen Effekt vorzugsweise innerhalb des Regelziels zurückzuführen ist. Mit anderen Worten handelt es sich hierbei um die regelzielsinneren Störungen physikalischen Ursprungs.

Z.B. wird Die Positioniergenauigkeit von Maschinen-Vorschubachsen (insbesondere Werkzeug-, Bearbeitungs- und Produktionsmaschinen) durch Reibung, z.B. am Antriebsstrang oder in den Führungen der bewegten Komponenten, verschlechtert. Vor allem an Positions-Umkehrpunkten entstehen vergleichsweise große Abweichungen zwischen Soll- und Ist-Position. Dies stellt gerade bei Maschinen im Werkzeugformenbau bspw. für Kunststoffspritzguss- oder Aluminiumdruckguss-Werkzeuge ein zentrales Problem dar. Aus diesem Grund beinhaltet die Sollwert-Generierung von NC-Steuerungen für die am Bearbeitungsprozess beteiligten Maschinenachsen einen Mechanismus zur Kompensation der an den Umkehrpunkten auftretenden Reibeffekte. Dieser Mechanismus kann durch den Geschwindigkeitsnulldurchgang des Soll- oder Istsignals ausgelöst werden und führt zur Aufschaltung eines zusätzlichen Kompensationssignals auf den Drehzahl-Sollwert.

Die mit dem durch die Kompensationsparameter festgelegten Kompensationsverlauf erreichbare Positioniergüte hängt wesentlich von der geeigneten Wahl der Parameter ab. Die für eine optimale Kompensationsgüte zu wählenden Parameter sind dabei Maschinen- und Achs-abhängig und unterscheiden sich üblicherweise an Umkehrpunkten mit positiver und negativer Beschleunigung ("oberer" und "unterer" Umkehrpunkt). Zudem hängt die optimale Wahl der Parameter üblicherweise vom Beschleunigungsniveau während der Richtungsumkehr ab.

Die Abhängigkeit vom Beschleunigungsniveau kann hierbei durch eine lineare Interpolation zwischen frei wählbaren beschleunigungsbezogenen Stützstellen für die (Kompensations-)Parameter realisiert werden.

Es steht somit fest, dass für eine einzelne Achse eine Vielzahl an Parametern für unterschiedliche Beschleunigungsniveaus an den beiden Umkehrpunkten zu bestimmen ist. Bei einer Maschine mit fünf Antriebsachsen und der Wahl von sechs Wertepaaren für die beschleunigungsabhängige Interpolation sind beispielsweise insgesamt 60 Parametersätze zu bestimmen, was bei Verwendung vorhandener Parametrierungs-Methoden zu einer hohen, von Kunden nicht akzeptierten Inbetriebnahme-Dauer führt.

Außerdem setzen die heute implementierten Methoden zur Kompensation von Reibung zunächst voraus, dass die Reibung über das Maschinenleben konstant ist. Ändert sich die Reibung - z.B. durch Einlaufen von Führungsschienen - ist ein manueller Eingriff erforderlich.

Aus dem Stand der Technik sind beispielsweise Methoden zur manuellen Parametrierung durch Beobachtung des Folgefehlers an einem Kreisformtest (siehe DE 198 41 716 A1) und einer heuristischen Trial-and-Error-Vorgehensweise bekannt. Bei diesem Ansatz ist ein erfahrener Inbetriebnehmer notwendig, der durch Beobachtung des Folgefehlers zwischen Soll- und Ist-Position, bspw. während der Sinus-förmigen Bewegung einer einzelnen Achse (Kreisformtest), eine iterative Anpassung der Parameter vornimmt. In der Praxis ist ein qualitativer Zusammenhang zwischen den einzelnen Parametern des Parameter-Satzes und dem sich ergebenden Folgefehler bekannt, auf dessen sich ein heuristisches Trial-and-Error-Vorgehen etabliert hat.

Als wesentliche Nachteile dieses Ansatzes sind zu nennen:

• Erfahrener Inbetriebnahme-Techniker notwendig
• Lange Inbetriebnahme-Dauer.

Wird ein solches Verfahren automatisiert, bleibt das Problem der langen Inbetriebnahme-Dauer bestehen.

Die objektive technische Aufgabe der vorliegenden Erfindung kann somit darin gesehen werden, Verfahren und Systeme zur Ermittlung von Kompensationsparametern bereitzustellen, die eine automatisierte und schnelle Ermittlung der Kompensationsparameter ermöglichen und dadurch die Inbetriebnahme vereinfachen und die für die Inbetriebnahme notwendige Zeit verkürzen.

Die Aufgabe wird mit dem eingangs genannten Verfahren erfindungsgemäß dadurch gelöst, dass ein erster Testparametersatz bereitgestellt wird; die Servoantrieb-Regeleinrichtung veranlasst wird, einen Betriebsvorgang, bei dem die zumindest eine Störung auftritt, durchzuführen, wobei die Servoantrieb-Regeleinrichtung bei dem Durchführen des Betriebsvorgangs basierend auf dem ersten Testparametersatz ein erstes Test-Kompensationssignal generiert und ein erstes Messsignal als Rückmeldung (von dem Regelziel) erhält; aus dem ersten Messsignal ein erstes Fehlersignal ermittelt wird; die Kompensationsparameter mittels eines Ersatzmodells, wobei das Ersatzmodell Fehlersignale auf Kompensationssignale abbildet, und unter Verwendung des ersten Fehlersignals ermittelt werden.

Bei einer Ausführungsform kann vorgesehen sein, dass beim Ermitteln des ersten Fehlersignals Sollwerte verwendet werden, wobei die Sollwerte durch den Betriebsvorgang festgelegt sind.

Bei einer Ausführungsform kann vorgesehen sein, dass die Kompensationsparameter anhand eines durch das Ersatzmodell auf ein Kompensationssignal abgebildeten ersten Fehlersignals - eines Ersatz-Kompensationssignals - bestimmt/ermittelt werden. Dabei kann beispielsweise eine Differenz zwischen einem Kompensationsverlauf und dem Ersatz-Kompensationssignal minimiert werden, wobei der Kompensationsverlauf als Minimierungsvariable verwendet wird. Mit anderen Worten wird dabei die aus einem beliebigen bzw. variierbaren Kompensationssignal und dem Ersatz-Kompensationssignal gebildete Differenz durch Variieren der das beliebige Kompensationssignal festlegenden/definierenden Parameter minimiert. Die Ermittlung der Kompensationsparameter ist dabei sehr einfach und sehr schnell.

Das Ersatzmodell modelliert beispielsweise das Verhalten der Servoantrieb-Regeleinrichtung und des Regelziels. Beispielsweise kann das Ersatzmodell als Modell eines geschlossenen Regelkreises, z.B. eines Lageregelkreises ausgebildet sein.

Bei einer Ausführungsform kann vorgesehen sein, dass der erste Testparametersatz aus Kompensationsparametern besteht, die alle gleich null sind (erster Testlauf: ohne Kompensation).

Bei einer Ausführungsform kann vorgesehen sein, dass ferner ein zweiter Testparametersatz bereitgestellt wird; die Servoantrieb-Regeleinrichtung veranlasst wird, den Betriebsvorgang zu wiederholen, wobei die Servoantrieb-Regeleinrichtung bei dem Wiederholen des Betriebsvorgangs basierend auf dem zweiten Testparametersatz ein zweites Test-Kompensationssignal generiert, wobei sich das zweite Test-Kompensationssignal von dem Test-Kompensationssignal unterscheidet, und als Rückmeldung ein zweites Messsignal erhält; aus dem zweiten Messsignal ein zweites Fehlersignal ermittelt wird; auf Basis von den Test-Kompensationssignalen und den Messsignalen ein Übertragungsverhaltensmodell ermittelt wird, wobei das Übertragungsverhaltensmodell ein Übertragungsverhalten zwischen Kompensations- (Input/Eingang) und Fehlersignalen (Output/Ausgang) simuliert; die Kompensationsparameter anhand des Übertragungsverhaltensmodells ermittelt werden.

Bei einer Ausführungsform kann vorgesehen sein, dass beim Ermitteln der Kompensationsparameter anhand des Übertragungsverhaltensmodells eine Optimierung, insbesondere eine Minimierung eines auf ein vorgegebenes Fehlersignal und auf ein mittels des Übertragungsverhaltensmodells simuliertes Fehlersignal bezogenen Gütewerts erfolgt. Außerdem kann es zweckmäßig sein, wenn die Optimierung vorzugsweise die Minimierung durch Variieren von Parametern erfolgt, welche Parameter ein (Kompensations-)Signal festlegen, welches Signal als Eingang für das Übertragungsverhaltensmodell verwendet wird, um das simulierte Signal zu generieren.

Durch die Optimierung wird angestrebt, das simulierte (Fehler-)Signal mit dem vorgegebenen Fehlersignal in Deckung zu bringen. Das vorgegebene Fehlersignal wird vorzugsweise während der Optimierung nicht verändert.

Bei einer Ausführungsform kann vorgesehen sein, dass das vorgegebene Fehlersignal das erste Fehlersignal ist.

Bei einer Ausführungsform kann vorgesehen sein, dass das vorgegebene Fehlersignal das zweite Fehlersignal ist.

Bei einer Ausführungsform kann vorgesehen sein, dass eine p-Norm mit $p \in \mathbb{R}$, $p \geq 1$ als Gütewert verwendet wird.

Bei einer Ausführungsform kann vorgesehen sein, dass der zweite Testparametersatz die anhand des Ersatzmodells bestimmten Kompensationsparameter umfasst, vorzugsweise aus den anhand des Ersatzmodells bestimmten Kompensationsparametern besteht, sodass das zweite Test-Kompensationssignal gleich einem auf den anhand des Ersatzmodells bestimmten Kompensationsparametern basierenden Kompensationssignal ist.

Bei einer Ausführungsform kann es zweckdienlich sein, wenn die Servoantrieb-Regeleinrichtung veranlasst wird, den Betriebsvorgang ein weiteres Mal durchzuführen, wobei die Servoantrieb-Regeleinrichtung das Kompensationssignal basierend auf den anhand des Übertragungsverhaltensmodells ermittelten Kompensationsparametern generiert und als Rückmeldung ein drittes Messsignal erhält, wobei basierend auf dem dritten Messsignal ein drittes Folgefehler ermittelt wird, wobei das erste, das zweite und das dritte Fehlersignale verglichen werden, um jene Kompensationsparameter zu wählen, welche zu dem geringsten Fehlersignal führen.

Bei einer Ausführungsform kann vorgesehen sein, dass das Fehlersignal ein Lage- bzw. Positions- oder Geschwindigkeitsfehlersignal ist.

Bei einer Ausführungsform kann vorgesehen sein, dass das Regelziel als eine Werkzeug-, Bearbeitungs- oder Produktionsmaschine ausgebildet ist.

Bei einer Ausführungsform kann vorgesehen sein, dass die Störung durch einen Reibeffekt hervorgerufen wird, wobei der Reibeffekt im Betrieb an zumindest einem Umkehrpunkt einer servogetriebenen/servoantreibbaren Achse des Regelziels auftritt.

Bei einer Ausführungsform kann vorgesehen sein, dass die Kompensationsparameter abhängig von der Achsstellung des Regelziels ermittelt werden.

Bei einer Ausführungsform kann vorgesehen sein, dass die Achse eine Vorschub- oder Rotationsachse ist. Weitere Typen von Achsen sind denkbar: Rotationsachsen mit Getriebe, Rotationsachsen mit Torquemotor, Translatorische Vorschubachsen mit Linearmotor, Translatorische Vorschubachsen mit Kugelgewindetrieb und einem oder mehreren Rotationsmotoren, Translatorische Vorschubachsen mit Ritzel/Zahnstange-Übersetzung und einem oder mehreren Rotationsmotoren.

Bei einer Ausführungsform kann vorgesehen sein, dass der zumindest eine Umkehrpunkt ein Positions-Umkehrpunkt ist.

Bei einer Ausführungsform kann vorgesehen sein, dass die Servoantrieb-Regeleinrichtung eine NC-Steuerung-Einheit und eine Servoantrieb-Einheit umfasst.

Die Aufgabe wird außerdem erfindungsgemäß mit einem Verfahren dadurch gelöst, dass bei dem Verfahren ein Regelziel überwacht wird, wobei das Regelziel im Betrieb von einer Servoantrieb-Regeleinrichtung geregelt wird, wobei die Servoantrieb-Regeleinrichtung dazu eingerichtet ist, beim Auftreten einer Störung in dem Regelziel anhand von Kompensationsparametern ein Kompensationssignal zu generieren, um die Störung zu kompensieren, wobei während der Überwachung das vorgenannte Verfahren zur Ermittlung von Kompensationsparametern ereignisgetriggert und/oder in periodischen Zeitabständen ausgeführt wird, um optimierte Kompensationsparameter zu ermitteln, die optimierten Kompensationsparameter mit den Kompensationsparametern verglichen werden, beim Vorliegen einer einen vordefinierten Wert übersteigenden Abweichung der Kompensationsparameter von den optimierten Kompensationsparametern eine Warnung ausgegeben wird.

Dieses Verfahren lässt sich nutzen, um z.B. eine regelmäßige Adaption an sich ändernde Reibverhältnisse zu erreichen.

Bei einer Ausführungsform kann vorgesehen sein, dass das Verfahren ein Verschleißanalyse-Verfahren, eine Wartung, vorzugsweise eine zustandsorientierte Wartung oder Condition-Monitoring-Verfahren ist.

Bei einer Ausführungsform kann vorgesehen sein, dass beim Vorliegen einer einen vordefinierten Wert übersteigenden Abweichung der Kompensationsparameter von den optimierten Kompensationsparametern die optimierten Kompensationsparameter z.B. von der Servoantrieb-Regeleinrichtung übernommen werden, beispielsweise um Kompensation aufgrund der optimierten Kompensationsparameter auszuführen.

Bei einer Ausführungsform kann vorgesehen sein, dass das Ausführen des Verfahrens zur Ermittlung der Kombinationsparameter bei einem Nicht-Mehr-Erfüllen eines definierten Qualitätskriteriums, beispielsweise beim Übersteigen eines vorbestimmten Werts durch eine Soll-Ist-Wert-Abweichung an Umkehrpunkten bei Referenzfahrten (z.B. Kreisformtest) oder bei regulärem Maschinen-Betrieb, ausgelöst wird.

Bei einer Ausführungsform kann vorgesehen sein, dass, wenn die optimierten Parameter übernommen werden, eine Meldung ausgegeben wird.

Außerdem wird die Aufgabe mit einem System erfindungsgemäß dadurch gelöst, dass das System eine Servoantrieb-Regeleinrichtung, ein Regelziel und eine Recheneinrichtung umfasst, wobei das Regelziel im Betrieb von der Servoantrieb-Regeleinrichtung geregelt wird, wobei im Betrieb des Regelziels (in dem Regelziel) zumindest eine Störung auftritt, wobei die Servoantrieb-Regeleinrichtung dazu eingerichtet ist, beim Auftreten der zumindest einen Störung ein Kompensationssignal zu generieren, um die zumindest eine Störung zu kompensieren, wobei das Kompensationssignal durch Kompensationsparameter definiert ist, wobei die Recheneinrichtung dazu konfiguriert ist, um das vorgenannte Verfahren zur Ermittlung der Kompensationsparameter oder das vorgenannte Verfahren zur Überwachung des Regelziels auszuführen.

Bei einer Ausführungsform kann vorgesehen sein, dass die Recheneinrichtung einen maschinenlesbaren, z.B. flüchtigen oder nicht-flüchtigen Speicher, auf dem maschinenausführbare Komponenten gespeichert werden können, und einen mit dem maschinenlesbaren Speicher operativ gekoppelten Prozessor umfasst, der dazu konfiguriert ist, die maschinenausführbaren Komponenten auszuführen.

Bei einer Ausführungsform kann vorgesehen sein, dass die Servoantrieb-Regeleinrichtung die Recheneinrichtung umfasst.

Die vorgenannten Verfahren und Systeme führen zu deutlich geringerem Zeitaufwand bei der Bestimmung der Kompensationsparameter. Die Zeitersparnis liegt u.a. daran, dass die Kompensationsparameter anhand mathematischer System-Modelle generiert werden und dafür wenige reale Messungen notwendig sind. Die Zeitersparnis liegt unter anderem daran, dass die Kompensationsparameter anhand mathematischer System-Modelle anstelle realer Messungen ermittelt werden.

Bei den vorgenannten Verfahren kann der Parametersatz solange iteriert werden, bis sich ein zufriedenstellender Fehlerverlauf ergibt. Bei Verfahren nach dem Stand der Technik muss dafür für jeden Parametersatz eine reale Messung mit der Dauer einer Sinusperiode durchgeführt werden. Vor allem bei Sollsignalen mit hoher Periodendauer dauert dies sehr lange. Bei einer Periodendauer von 30 Sekunden dauert die Messung demnach mindestens 30 Sekunden. Die Anzahl der Parametersätze steigt rasant mit der Anzahl der Achsen. Wie oben beschrieben, ist dabei 60 Parametersätze keine große Zahl.

Beim vorgenannten Verfahren wird die reale Messung durch die Simulation ersetzt. Diese erfolgt virtuell, z.B. auf einem Microcontroller und ist in wenigen Milli-Sekunden abgeschlossen.

Im Folgenden wird die Erfindung anhand der in den Figuren dargestellten Ausführungsbeispiele näher beschrieben und erläutert. Es zeigen:

FIG 1     eine Regelstruktur einer Maschinenachse,

FIG 2     ein Beispiel für Kompensationsverlauf für eine Linearachse,

FIG 3     eine Systemarchitektur mit einer der Servoantrieb-Regeleinrichtung zugeordneten Recheneinrichtung zur Bestimmung von Kompensationsparametern,

FIG 4     ein Flussdiagramm eines Verfahrens,

FIG 5     ein Ersatzmodell des geschlossenen Lageregelkreises,

FIG 6     ein Übertragungsverhaltensmodell

FIG 7     einen Vergleich verschiedener Kompensationssignale, und

FIG 8     einen Algorithmus für Zustandsabhängige Wartung und/oder Adaption an geändertes Systemverhalten.

In den Ausführungsbeispielen und Figuren können gleiche oder gleiche Elemente jeweils mit den gleichen Bezugszeichen versehen sein. Bei den zeitabhängigen Signalen können natürlich die Zeitverläufe unterschiedlich sein, obwohl die Signale mit gleichen Bezugszeichen versehen sind. Außerdem dienen die Bezugszeichen in den Ansprüchen und in der Beschreibung lediglich zu einem besseren Verständnis der vorliegenden Anmeldung und sollen auf gar keinen Fall als eine Beschränkung des Gegenstands der vorliegenden Erfindung angesehen werden.

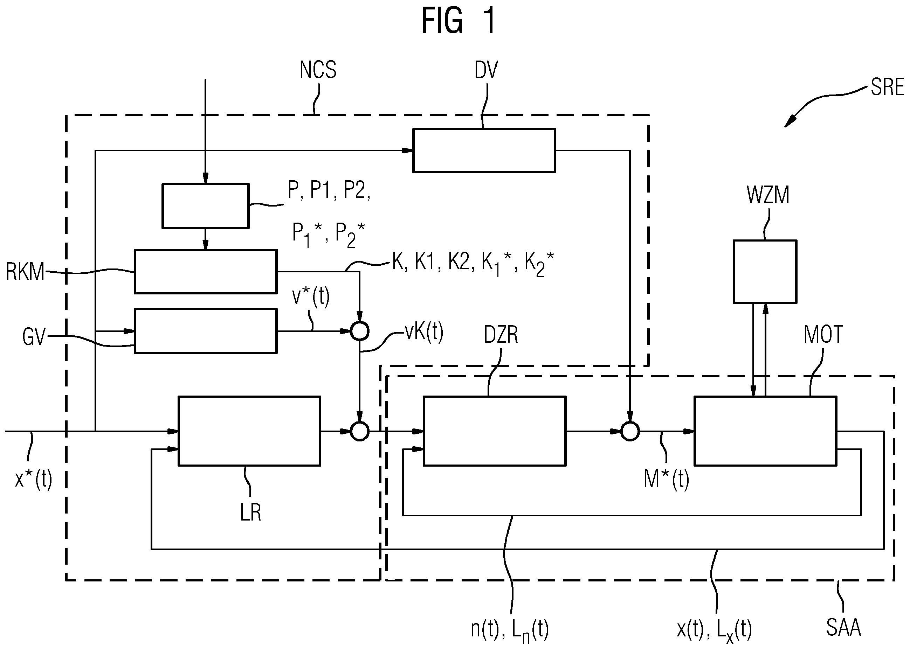

FIG 1 zeigt eine beispielhafte Regelstruktur einer Maschinenachse, beispielsweise einer Linearachse, insbesondere einer lagegeregelten Vorschub-Achse einer Werkzeugmaschine WZM. FIG 1 lässt eine NC-Steuerung NCS und eine Servo-Achs-Antriebseinheit SAA erkennen, die gemeinsam eine Servoantrieb-Regeleinrichtung SRE bilden, die einer erfindungsgemäßen Servoantrieb-Regeleinrichtung entsprechen kann.

Die Achse der Werkzeugmaschine WZM wird somit im Betrieb von der Servoantrieb-Regeleinrichtung SRE geregelt.

Die NC-Steuerung NCS kann beispielsweise einen Lageregler LR, eine Geschwindigkeitsvorsteuerung GV, ein Reibkompensationsmodul RKM und eine Drehmomentvorsteuerung DV umfassen. Ein Soll-Position-Signal x*(t), welches beispielsweise eine Durchfahrt der beiden Umkehrpunkte der Vorschub-Achse verursacht (die Größe t bezeichnet die Zeit als freie Variable), kann dem Lageregler LR, der Geschwindigkeitsvorsteuerung GV und der Drehmomentvorsteuerung DV zugeführt werden.

Es kann beispielsweise ein Sinus-förmiges Positions-Soll-Signal $x^*(t) = Samp \cdot sin(2\pi t / STperi)$ herangezogen werden, wobei bspw. $Txsoll = 1,25 \cdot STperi$ ist. Dabei ist die Variable $Samp$ die Amplitude und $STperi$ die Periodendauer der Sinus-Bewegung.

Dem Reibkompensationsmodul RKM können unterschiedliche Kompensationsparameter beispielsweise in Form von Kompensationsparametersätzen P, P1, P2, P1*, P2* zugeführt, die verschiedene Kompensationssignale K, K1, K2, K1*, K2* definieren.

Das Reibkompensationsmodul RKM ist vorgesehen, um Kompensationssignale K, K1, K2, K1*, K2* generieren, die zur Kompensation der aufgrund von Reibeffekten auftretenden Störungen - kurz Reibkompensation - verwendet werden. Es versteht sich, dass die Kompensationssignale K, K1, K2, K1*, K2* im Allgemeinen zeitabhängig sind, also eine Funktion von Zeit f(t) sind.

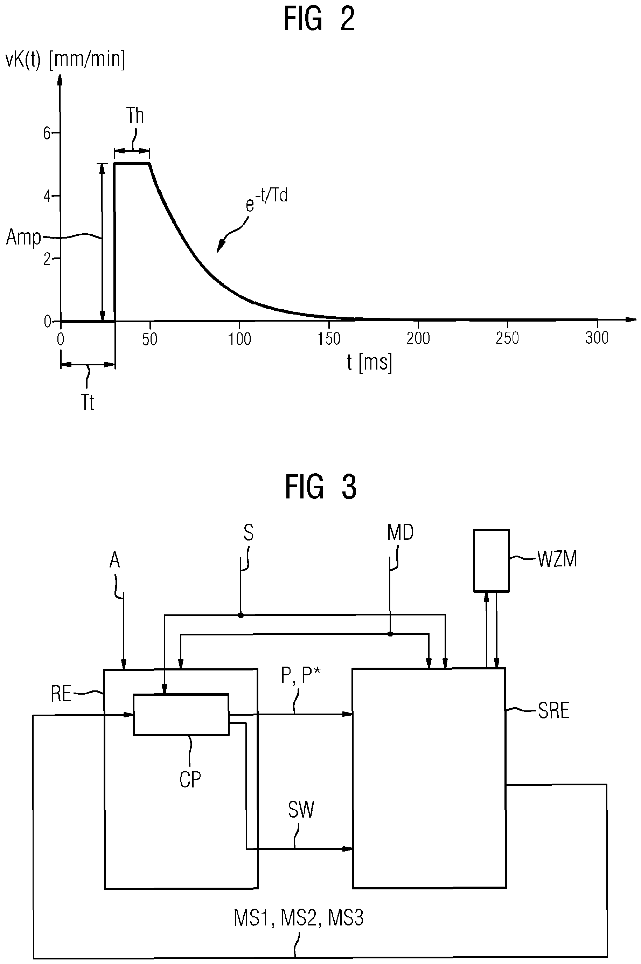

An dieser Stelle sei auf FIG 2 Bezug genommen, die ein Beispiel eines Kompensationssignals K illustriert, das bei Störungen an einer Achse, beispielsweise an einer lagegeregelten, insbesondere translatorischen Vorschub-Achse der Werkzeugmaschine WZM angewandt werden kann. Die Achse kann beispielsweise eine (im Betrieb der Werkzeugmaschine WZM) servogetriebene Linearachse sein. Die Störung kann beispielsweise durch Reibeffekte verursacht werden, die an den Umkehrpunkten der Achse, also dort, wo die Geschwindigkeit ihr Vorzeichen ändern, vorzugsweise deterministisch auftritt. Bei dem in FIG 2 gezeigten Kompensationssignal K(t) kann sich also um ein Kompensationssignal handeln, das zum Kompensieren der aufgrund der Reibeffekte auftretenden Fehler (z.B. Positionsund/oder Drehzahl- und/oder Geschwindigkeitsfehler an den Achs-Umkehrpunkten) vorgesehen ist. Das Kompensationssignal K hängt in diesem Beispiel von insgesamt vier Parametern ab: Verzögerungszeit Tt, Haltezeit Th, Abklingzeit Td, und Maximalwert der Kompensation Amp.

Beispielsweise kann das Kompensationssignal derart generiert werden, dass t=0 einem der Umkehrpunkte bzgl. deren Sollwerten (also v*(t)) entspricht. Dabei wird v*(t) beobachtet und der Zeitpunkt bei dem v*(t) das Vorzeichen von plus auf minus wechselt, ist der Null-Zeitpunkt für den Kompensationsverlauf. Bei Umschaltung von minus nach plus kann der Geschwindigkeits-Kompensationsverlauf K(t) so aufgeschaltet werden, dass K ein positives Vorzeichen hat. Bei der Umschaltung von v*(t) von plus nach minus kann K ein negatives Vorzeichen aufweisen.

Die Geschwindigkeitsvorsteuerung GV kann ein Soll-Geschwindigkeit-Signal v*(t) erzeugen, auf welches das Kompensationssignal K, K1, K2, K1* oder K2* aufgeschaltet beziehungsweise addiert werden kann, wodurch ein Signal vK(t) erzeugt wird.

Das Signal vK(t) - das Soll-Geschwindigkeit-Signal v*(t) mit dem darauf aufgeschalteten Kompensationssignal K1, K2, K1* oder K2* - kann auf ein von dem Lageregler LR erzeugtes Signal addiert und einem Drehzahlregler DZR zugeführt werden, der in der Servo-Achs-Antriebseinheit SAA enthalten ist.

Mit anderen Worten bilden das Kompensationssignal K(t), der Lagerelger-Ausgang und der Ausgang der Geschwindigkeitsvorsteuerung GV bzw. das Geschwindigkeits-Soll-Signal v*(t) zusammen den Drehzahlregler-Eingang.

Der Drehzahlregler DZR kann ein Signal erzeugen, welches nach einer Addition mit einem von der Drehmomentvorsteuerung DV erzeugten Signal als ein Soll-Motordrehmoment-Signal M*(t) einem Motor (Motor mit Last) MOT zugeführt werden kann. Der Motor mit Last MOT stellt das zu regelnde System - also eine Maschinen-Achse - dar und ist ein Beispiel des erfindungsgemäßen Regelziels. Der Motor kann in der Servo-Achs-Antriebseinheit SAA enthalten sein. Der Motor MOT kann auch als ein Teil der Werkzeugmaschine WZM ausgebildet sein, deren Achse von der Servoantrieb-Regeleinrichtung SRE (von der NC-Steuerung NCS und der Servo-Achs-Antriebseinheit SAA) geregelt werden kann und im Betrieb geregelt wird.

Beim Auftreten einer Störung in der Werkzeugmaschine WZM, die beispielsweise, wie bereits erwähnt, durch eine Reibung hervorgerufen werden kann (Reibeffekt), kann das Kompensationssignal K, K1, K2, K1* oder K2* beispielsweise basierend auf einem der vorgenannten Kompensationsparametersätze P, P1, P2, P1*, P2* generiert werden.

Die Reibeffekte, insbesondere Haftreibungseffekte können insbesondere an den Umkehrpunkten auftreten. Daher kann es zweckdienlich sein, wenn die Kompensation infolge eines bestimmten Ereignisses beispielsweise eines Nulldurchgangs des Geschwindigkeitsvorsteuersignals, was dem Passieren eines Umkehrpunktes entspricht, ausgelöst wird (z.B. bei t=0 in FIG 2).

Die Detektion eines Umkehrpunkts kann durch Detektion eines Nulldurchgangs eines Geschwindigkeitssignals erfolgen. Als Geschwindigkeitssignal kann z.B. das Geschwindigkeit-Ist-Signal v(t) oder der Ausgang des Positionsreglers LR oder der Ausgang der Geschwindigkeitsvorsteuerung v*(t) in FIG 1 verwendet werden.

Danach kann das Kompensationssignal K(t) für die Dauer Tt gleich null sein ($t0 \leq t < Tt$, $|K(t)| = 0$).

Im Anschluss kann die Amplitude des Kompensationssignal vorzugsweise sprunghaft auf einen bestimmten Wert erhöht und auf diesem Niveau für eine bestimmte Zeit $Tt \leq t < Tt+Th$ gehalten werden ($|K(t)| = Amp$). Danach kann ein Exponentielles Abklingen mit $|K(t)| = Amp \cdot \exp((Tt+Th-t)/Td)$ folgen.

Das Vorzeichen von K(t) kann sich nach der Art des Umkehrpunkts richten. Es kommen folgende Bezeichnungen für die Umkehrpunkte in Betracht: Wechsel von einer positiven zu einer negativen Achs-Geschwindigkeit: Umkehrpunkt 1 bzw. UP1 oder oberer Umkehrpunkt; und Wechsel von einer negativen zu einer positiven Achs-Geschwindigkeit: Umkehrpunkt 2 bzw. UP2 oder unterer Umkehrpunkt. Die den Umkehrpunkten nachfolgenden Zeitfenster mit der Dauer einer Periodenhälfte STperi/2 des sinus-förmigen Sollverlaufs werden mit T_UP1 und T_UP2 bezeichnet. Es kann vorteilhaft sein, wenn das Vorzeichen von K(t) positiv ist, wenn die Geschwindigkeit ihr Vorzeichen von negativ nach positiv wechselt, und negativ, wenn die Geschwindigkeit ihr Vorzeichen von positiv nach negativ wechselt.

Um unterschiedlicher Beschleunigung an unterschiedlichen Umkehrpunkten Rechnung zu tragen, können die Parameter Amp, Tt, Th, Td für die beiden Umkehrpunkte getrennt vorgegeben werden.

Der in FIG 2 gezeigte Kompensationsverlauf beziehungsweise das gezeigte Kompensationssignal kann durch vier frei wählbare Parameter P = {Amp, Tt, Th, Td} je Umkehrpunkt UP1, UP2 festgelegt werden.

Auch andere Formen der Kompensationssignale zur Kompensation, beispielsweise zur Reibkompensation bei einer Maschinenachse, beispielsweise bei einer Linearachse, insbesondere bei einer lagegeregelten Vorschub-Achse der Werkzeugmaschine WZM sind denkbar. Z.B. kann eine Impulsfunktion verwendet werden. Die Kompensation kann einen PT1- oder PT2-förmigen Anstieg des Kompensationssignals anstelle des oben gezeigten sprungförmigen Anstiegs aufweisen. Außerdem kann Kompensationsfunktion abschnittsweise aus Polynomen n-ten Grades definiert sein.

Darüber hinaus kann der Motor MOT Rückkopplungssignale für den Lageregler LR und den Drehzahlregler DZR erzeugen. Das Rückkopplungssignal für den Lageregler LR kann eine Ist-Motorposition x(t) und eine Ist-Lastposition Lx(t) umfassen. Das Rückkopplungssignal für den Drehzahlregler DZR kann eine Ist-Motordrehzahl n(t) und eine Ist-Lastdrehzahl Ln(t) umfassen.

FIG 3 zeigt eine Systemarchitektur mit einer der Servoantrieb-Regeleinrichtung SRE zugeordneten Recheneinrichtung RE zur Bestimmung der Kompensationsparameter.

Die Recheneinrichtung RE umfasst beispielsweise zumindest einen maschinenlesbaren, z.B. flüchtigen oder nicht-flüchtigen Speicher, auf welchem maschinenausführbare Komponenten gespeichert werden können, und zumindest einen mit dem maschinenlesbaren Speicher operativ gekoppelten Prozessor, der dazu konfiguriert ist, die maschinenausführbaren Komponenten auszuführen.

Zusammenfassend umfasst die Recheneinrichtung RE bzw. der Speicher der Recheneinrichtung RE eine Komponente CP mit Befehlen, die beim Ausführen der Komponente CP durch den Prozessor der Recheneinrichtung RE (oder durch einen anderen Prozessor), die Servoantrieb-Regeleinrichtung SRE veranlassen, einen Betriebsvorgang/ ein Betriebsszenario, bei dem die zu kompensierende Störung aufgrund von Reibeffekten auftritt, durchzuführen.

Die Recheneinrichtung RE kann, muss aber nicht, ein Teil der Servoantrieb-Regeleinrichtung SRE sein. Die Ressourcen, die zur Speicherung und Ausführung der Komponente CP notwendig sind, können durch die Servoantrieb-Regeleinrichtung SRE bereitgestellt werden. Sie können aber auch durch eine von der Servoantrieb-Regeleinrichtung SRE baulich getrennte Einheit, z.B. durch einen PC bereitgestellt werden.

FIG 3 verdeutlicht, dass die Recheneinrichtung RE als eine von der Servoantrieb-Regeleinrichtung SRE baulich getrennt ausgebildete Einheit ausgebildet sein kann, und illustriert Art und Weise, wie die Recheneinrichtung RE bzw. die maschinenausführbare Komponente CP, z.B. ein Softwaremodul, das auf dem maschinenlesbaren Speicher der Recheneinrichtung RE gespeichert ist, mit der Servoantrieb-Regeleinrichtung SRE interagiert, wenn sie (die Komponente CP) durch den Prozessor der Recheneinrichtung RE abgearbeitet wird.

Die Komponente CP kann beispielsweise als Teil (z.B. als Modul) einer Software, z.B. einer HMI-, einer Inbetriebnahmeoder Engineering-Software ausgebildet sein. Diese Software kann entweder auf einem (externen) PC, einem in die Anlage integrierten IPC oder unmittelbar auf der NCU der NC-Steuerung ausgeführt werden. Die Komponente CP kann ferner auf der NC-Steuerung NCS oder auf einer PLC-Steuerung ausgeführt und vorzugsweise gespeichert sein.

Die Komponente CP kann als eine Applikation eines industriellen Computers, z.B. eines Edge-Computers oder als eine Cloud-Applikation ausgebildet sein.

Die Komponente CP kann bspw. auf einer Programmierung in Matlab o.Ä. basieren, der durch einen entsprechenden Interpreter in die Sprache C++ umgesetzt werden kann (sog. Codegenerierung).

Als Ausgabewerte der Komponente CP dienen ein Parametersatz P, P1, P2, P1* oder P2* aus den Kompensationsparametern und Steuerwerte SW für die Servoantrieb-Regeleinrichtung SRE.

Die Komponente CP stößt somit eine Durchführung eines Betriebs- beziehungsweise eines Messszenarios an, indem sie der Servoantrieb-Regeleinrichtung SRE einen Parametersatz P, P1, P2, P1* oder P2* und die Steuerwerte SW zuführt.

Die Steuerwerte SW können beispielsweise Sollwerte, z.B. Soll-Positionswerte für das Soll-Position-Signal x*(t) umfassen. Darüber hinaus kann die Komponente CP ein boolesches Signal zur Aktivierung und/oder Deaktivierung des Messszenarios auf der NC-Steuerung NCS übergeben.

Es versteht sich, dass die Servoantrieb-Regeleinrichtung SRE ein entsprechendes Teileprogramm abarbeitet, wenn sie den Betriebsvorgang / das Betriebs-/ das Messszenario durchführt.

Darüber hinaus kann die Komponente CP Kenngrößen S, mit welchen bspw. ein Soll-Verlauf $S^*(t)$ z.B. für ein definiertes Zeitintervall $0 \leq t < Txsoll$ festgelegt werden kann, als Eingangswerte erhalten. Der Soll-Verlauf $S^*(t)$ kann als Referenzszenario für die Zeit der Bestimmung der Kompensationsparameter herangezogen werden und repräsentiert ein Szenario, für welches eine Kompensation von Störungen angestrebt wird.

Beispielsweise enthalten die Kenngrößen S bei dem vorgenannten sinus-förmigen Positions-Soll-Signal $x^*(t) = Samp \cdot sin(2\pi t/STperi)$ die Amplitude $Samp$ und die Periodendauer $STperi$ der Sinus-Bewegung.

FIG 3 ist zu entnehmen, dass die Servoantrieb-Regeleinrichtung SRE die (gleichen) Kenngrößen ebenfalls erhält (z.B. per manuelle Angabe).

Der sinusförmige Sollverlauf $x^*(t)$ führt zu einer Hin- und Her-Bewegung der Vorschub-Achse und enthält zwei Umkehrpunkte, wobei bei einem ersten Umkehrpunkt sowohl bezüglich der Ist- als auch bezüglich der Sollgrößen eine Umkehr von positiver zu negativer Geschwindigkeit stattfindet und bei einem zweiten Umkehrpunkt eine Umkehr von negativer zu positiver Geschwindigkeit stattfindet.

Darüber hinaus kann die Komponente CP Maschinendaten MD erhalten, die beispielsweise von einem Maschinennutzer vorgegeben werden. Die Maschinendaten können beispielsweise Information über den Achs-Typ (rotatorische oder translatorische Bewegung der Achse, etc.), Proportionalverstärkung Kv der Lageregelung LR, Nachstellzeit Tn des Integrationsglieds der Drehzahlregelung DZR, etc. umfassen.

Ferner können der Komponente CP Einstellparameter A, welche die Funktion des Algorithmus / der Komponente CP näher spezifizieren zugeführt werden. Beispielsweise kann die Komponente CP über einen Expertenmodus verfügen, wobei ein Einstellen der Parameter A nur in dem Expertenmodus möglich ist.

Bei dem Durchführen des Betriebsszenarios generiert die Servoantrieb-Regeleinrichtung SRE ein Kompensationssignal K, K1, K2, K1*, K2*. Als eine Rückmeldung von der Werkzeugmaschine WZM erhält die Servoantrieb-Regeleinrichtung SRE ein Ist-Signal beziehungsweise ein Messsignal MS1, MS2, MS3.

Diese Messsignale MS1, MS2, MS3 können die vorgenannten Rückkopplungssignale des Motors MOT für den Lageregler LR und den Drehzahlregler DZR sein - also Ist-Position x(t), eine Ist-Lastposition Lx(t), Ist-Drehzahl n(t) und eine Ist-Lastdrehzahl Ln(t).

Die Messsignale MS1, MS2, MS3 kann die Servoantrieb-Regeleinrichtung SRE der Recheneinrichtung RE, insbesondere der Komponente CP zuführen.

Außerdem kann die Komponente CP zusätzlich ein oder mehrere der folgenden Signale verwenden:

Positions-Soll-Verlauf $x^*(t)$;
Kompensationssignal $K(t)$;
Geschwindigkeits-Soll-Verlauf $v^*(t)$.

Dafür kann die Komponente CP die Signale x*(t), K(t), v*(t) entweder jeweils selbst bilden oder von Servoantrieb-Regeleinrichtung SRE übertragen bekommen. Falls die Komponente CP die Signale selbst bildet, bildet sie das Signal x*(t) vorzugsweise sinusförmig und überträgt dieses an Servoantrieb-Regeleinrichtung SRE.

Die in der Komponente verwendeten Signale können, beispielsweise über den erwähnten vorgegebenen Zeithorizont *Txsoll* aufgezeichnet werden.

Die Abtastzeit der Messung kann sich beispielsweise nach dem Takt der Lageregelung LR richten und z.B. 125μs, 250μs, 500μs, 1ms, 2ms, 4ms, 8ms betragen.

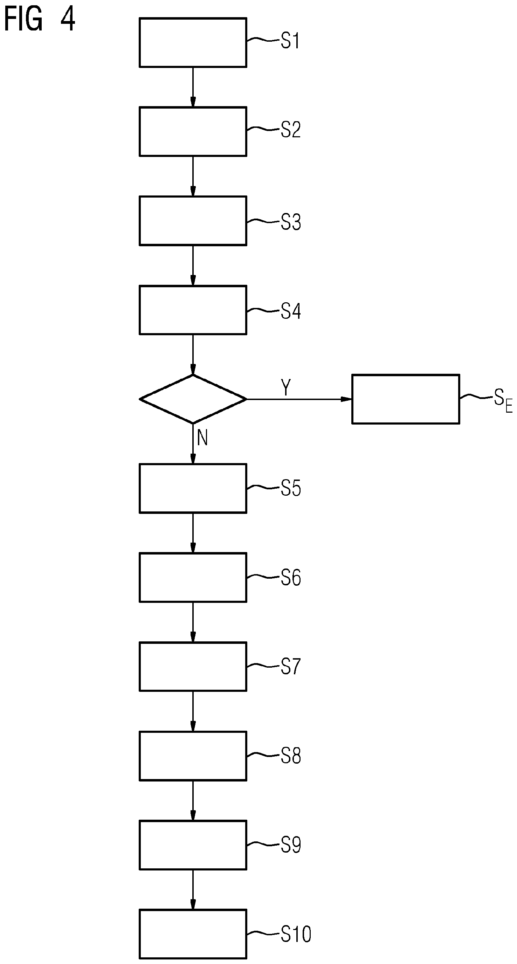

FIG 4 zeigt ein Flussdiagramm, das einen Ablauf eines beispielhaften Verfahrens zur Ermittlung der Kompensationsparameter veranschaulicht. Das Verfahren kann beispielsweise auf der Systemarchitektur der FIG 3 ablaufen.

Um die Kompensationsparameter P1* zu ermitteln, wird zunächst ein erster Testparametersatz P1 bereitgestellt - Schritt S1. Dieser kann beispielsweise per manuelle Eingabe über eine Benutzer-Schnittstelle der Komponente CP bereitgestellt werden. Die Komponente CP kann den ersten Testparametersatz P1 (nach bestimmten Vorgaben) auch automatisch generieren.

Der erste Testparametersatz P1 kann z.B. zeitlich konstante Kompensationsparameter umfassen, die beispielsweise alle gleich null sein können (erster Testlauf: ohne Kompensation).

In Schritt S2 führt die Komponente CP den ersten Testparametersatz P1 der Servoantrieb-Regeleinrichtung SRE zu und veranlasst diese, das beispielsweise durch die Kenngrößen S und die Steuerwerte SW vorgegebene Messszenario durchzuführen (erste Messung). Falls notwendig kann die Komponente CP der Servoantrieb-Regeleinrichtung SRE auch die Sollwerte SW zuführen oder das Durchführen des Messszenarios durch ein einfaches Signal an die Servoantrieb-Regeleinrichtung SRE, z.B. wie oben erwähnt, durch ein boolesches Signal anstoßen und/oder stoppen.

Die Servoantrieb-Regeleinrichtung SRE, vorzugsweise das Reibkompensationsmodul RKM der Servoantrieb-Regeleinrichtung SRE generiert aus dem ersten Testparametersatz P1 ein erstes Test-Kompensationssignal K1 und führt das zur Messung vorgesehene Betriebsszenario durch, bei dem der erste Testparametersatz P1 verwendet wird. Dabei erhält die Servoantrieb-Regeleinrichtung SRE ein erstes Messsignal MS1 als Rückmeldung.

Es ist denkbar, dass alle Parameter im Testparametersatz P1 gleich null sind, sodass das erste Test-Kompensationssignal K1 gleich null ist, d.h. das Betriebsszenario ohne Kompensation durchgeführt wird.

Anschließend kann die Servoantrieb-Regeleinrichtung SRE das erste Messsignal MS1 der Komponente CP der Recheneinrichtung RE zuführen.

Das erste Messsignal MS1 kann beispielsweise ein Positions-Ist-Verlauf x(t) sein, welches beispielsweise sich auf eine beliebige Messstelle an der Vorschubachse beziehen und durch einen rotatorischen oder translatorischen Geber ermittelt werden kann. Es ist möglich, dass der hierzu verwendete Geber nur für die Zeit der Parameter-Bestimmung zur Verfügung gestellt wird. Der Geber kann bspw. an der Vorschub-Achse montiert werden.

In Schritt S3 kann die Komponente CP aus dem ersten Messsignal ein erstes Fehlersignal (einen ersten Zeitverlauf des Folgefehlers) bestimmen. Hierzu kann die Komponente CP beispielsweise Sollwerte verwenden, welche Sollwerte durch das Messszenario festgelegt sind.

Beispielsweise kann die Komponente von dem zeitverschobenen Lage/Position-Sollwert x*(t-Te) den Lage/Position-Istwert x(t) subtrahieren: $eX(t) = x*(t-Te)-x(t)$.

Ein solches Fehlersignal, das als eine Differenz zwischen Ist-Position und zeitlich verschobener Soll-Position gebildet wird, ist bei der Bewertung des Reib-Fehlers ist besonders vorteilhaft. Durch die zeitliche Verschiebung der Soll-Position kann die auch ohne Reibung zu erwartende Verschiebung zwischen Soll- und Ist-Position berücksichtigt werden. Mit dieser Verschiebung ist wegen Verzögerungszeiten des Mikrocontrollers bei Ausführung des Regel- und Steuerungsalgorithmus zu rechnen.

Dabei kann die Variable *Te* beispielsweise so bestimmt werden, dass sich in einem Zeitintervall, in dem keine Achsumkehr auftritt, eine minimale Norm, z.B. 2-Norm für eX(t) ergibt. Dadurch kann erreicht werden, dass eX(t) nur die durch Störeffekte, insbesondere Störeffekte, z.B. Reibeffekte an den Umkehrpunkten, verursachte Abweichungen repräsentiert. Abweichungen durch Verzögerungen bzw. Totzeiten bei der Messung von x(t) und systematische Abweichungen, die bei Verfahren der Achse mit x*(t) ≠ 0 und einer nicht perfekt eingestellten Steuerungs- und Regelungsstruktur immer auftreten, werden auf diese Weise isoliert. Zur numerischen Bestimmung von Te kann bspw. ein lineares Least-Squares-Verfahren verwandt werden.

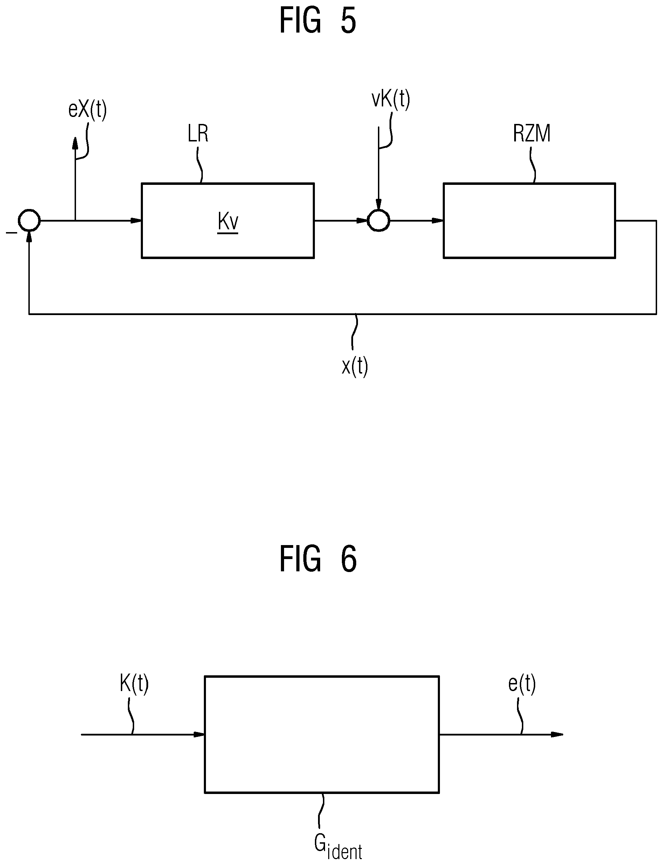

In Schritt S4 ermittelt die Komponente CP anhand des ersten Fehlersignals die Kompensationsparameter P1*. Dabei macht sich die Komponente ein vorzugsweise dynamisches Ersatzmodell EM (siehe FIG 5) zunutze, bei dem das Fehlersignal EM ein Ausgangssignal bildet. Als Eingangssignal für das Ersatzmodell EM wird ein Signal verwendet, welches im Zusammenhang mit dem Kompensationssignal K(t) steht. Das Ersatzmodell EM beschreibt also eine Beziehung zwischen dem Kompensations- und dem Fehlersignal.

Beim Ermitteln der Kompensationsparameter P1* führt die Komponente CP eine Optimierung anhand des Ersatzmodells EM durch.

Beispielsweise wird bei der Optimierung aus dem ersten Fehlersignal, beispielsweise dem eX(t), und dem Ersatzmodell EM ein dem Fehlersignal entsprechendes Ersatz-Kompensationssignal, z.B.

v_eX_equiv(t), gebildet. Die Optimierung hat durch Anpassung der Kompensationsparameter das Ziel die Differenz zwischen dem Ersatz-Kompensationssignal und dem Kompensationssignal, wobei das Kompensationssignal bzw. der das Kompensationssignal definierende Parametersatz als Variable verwendet wird, zu minimieren.

Das Ersatzmodell EM kann beispielsweise auf der Recheneinrichtung RE oder auch auf einem von der Recheneinrichtung RE separaten (entfernten) Speicher, z.B. in einer Cloud gespeichert sein.

FIG 5 zeigt ein Ersatzmodell EM eines geschlossenen Lageregelkreises, welches als erfindungsgemäßes Ersatzmodell verwendet werden kann. Das Ersatzmodell der FIG 5 umfasst ein Modell einer lagegeregelten NC-Achse, welche ein als lineares dynamisches System, insbesondere als ein LTI System (lineares zeitinvariantes dynamisches System) betrachtet wird.

Als Eingang und Optimierungsvariable kann dabei beispielsweise das Kompensationssignal K(t) verwendet werden, wobei das erste Fehlersignal eX(t) als Ausgang gesehen wird.

Das Ersatzmodell EM der FIG 5 beschreibt also das dynamische Ein-/Ausgangs-Verhalten, z.B. zwischen K(t) und eX(t). Dabei kann es zweckdienlich sein, von einer idealen Geschwindigkeitsvorgabe und einem (reinen) Verstärkungsglied mit einem Proportionalfaktor Kv als Lageregler LR - also von einer idealen Geschwindigkeitsregelung - auszugehen. Das Signal K(t) mit dem Ausgang des Lagereglers LR bildet den Eingang für ein Modell RZM des Regelziels, hier - des Motors mit Last MOT bzw. der Werkzeugmaschinenachse.

Das Ersatzmodell EM ist vorzugsweise ein PT1-Glied. Dabei kann das Übertragungsverhalten zwischen Eingangs- und Ausgangssignal durch den folgenden mathematischen Operator $G(s)=-1/(Kv+s)$ beschrieben werden. Die Variable s bezeichnet den Laplace-Operator. G(s) wird als Übertragungsfunktion bezeichnet und beschreibt das Übertragungsverhalten der gesamten geregelten Achse also von dem oben beschriebenen Verhalten - K(t) als Eingang, eX(t) als Ausgang.

Beispielsweise kann basierend auf dem genannten Ein-/Ausgangsverhalten (auf dem Ersatzmodell EM) eine Umrechnung des in Schritt S3 bestimmten ersten Fehlersignals eX(t) in das entsprechende Ersatz-Kompensationssignal v_eX_equiv(t) erfolgen, welches als Eingangssignal verwendet wird . Mathematisch kann dies durch Inversion der zuvor beschriebenen Übertragungsfunktion erreicht werden.

Dies kann beispielsweise in folgenden Teilschritten erfolgen. Zunächst kann das erste Fehlersignal eX(t) tiefpassgefiltert werden. Anschließend kann eine zeitliche Ableitung des tiefpassgefilterten ersten Fehlersignals beispielsweise durch numerische Differentiation gebildet werden. Danach kann das erste Fehlersignal eX(t) mit dem Faktor der Proportionalverstärkung Kv multipliziert werden. Zuletzt werden die Ableitung des tiefpassgefilterten ersten Fehlersignals und das erste mit dem Faktor der Proportionalverstärkung Kv multiplizierte Fehlersignal zusammenaddiert.

Anhand des dem ersten Fehlersignal eX(t) entsprechenden Ersatz-Kompensationssignals v eX equiv(t) können die Parametersätze P1*_UP1, P1*_UP2 für den jeweiligen Umkehrpunkt wie folgt ermittelt werden. Die beiden Umkehrpunkte UP1 und UP2 können dabei in den Zeitintervallen T_UP1 und T_UP2 getrennt betrachtet werden. Als Amp kann das Betragsmaximum von dem invertierten ersten Fehlersignal, also von dem Ersatz-Kompensationssignal v eX equiv(t) dienen. Die Verzögerungszeit kann gleich null gesetzt werden Tt = 0. Die Haltezeit Th und die Abklingzeit Td können als Th = k·Tsum, Td = (1-k) · Tsum mit 0 < k < 1 festgelegt werden, wobei der Parameter k durch die Einstellparameter bzw. Algorithmus-Parameter A festgelegt/ eingestellt werden kann. Dabei kann der Parameter Tsum durch Bilden eines Flächenintegrals von dem Ersatz-Kompensationssignal v_eX_equiv(t) und Dividieren des Flächenintegrals durch Amp bestimmt werden. Anschließend können die Parameter (Amp, Tt, Td, Th) derart variiert werden, dass ein bestimmter Gütewert J minimiert wird. Beispielsweise kann eine 1-Norm des ersten Fehlersignals eX(t) minimiert werden. Die Parameter, bei welchen ein Minimum erreicht wird, können als Kompensationsparameter P1* verwendet werden.

Als Gütewert J kann beispielsweise ein auf den simulierten Folgefehler (auf das simulierte Folgefehlersignal) bezogener Normalwert verwendet werden. Beispielsweise kann eine Norm des Folgefehlersignals, beispielsweise eines Lage- und/oder Drehzahl- und/oder Geschwindigkeit-Folgefehlers in einem Intervall nach einem Umkehrpunkt verwendet werden.

Je nach Art der zur Verfügung stehenden Messsignale (Lage und/oder Drehzahl und/oder Geschwindigkeit) können entsprechende (erstes, zweites oder auch - siehe unten - drittes) Fehlersignale unter Verwendung von einschlägigen SollSignalen als Differenzen gebildet und berechnet werden.

Es versteht sich, dass das oben Gesagte für beide Umkehrpunkte UP_1 und UP_2 gilt. In anderen Worten können sich die Gütewerte J aus abschnittsweiser Betrachtung des Fehlersignals eX(t) ermittelt werden. Beispielsweise können zwei Gütewerte J_UP1 und J_UP2 bezogen auf die beiden Umkehrpunkte mit den Zeitintervallen T_UP1 und T_UP2 verwendet werden. Die Parameter Amp_UP1, Tt_UP1, Th_UP1, Td_UP1 beziehungsweise Amp_UP2, Tt_UP2, Th_UP2, Td_UP2 sollen dabei so bestimmt werden, dass J_UP1 beziehungsweise J_UP2 minimal wird.

Als Gütewert J kann z.B. eine Norm, insbesondere BetragsMaximum, euklidische Norm, 4-Norm usw. dienen.

Als Zeitfenster kann z.B. ein fester Wert oder z.B. die Zeitdauer zwischen zwei Umkehrpunkten oder ein Bruchteil dieser Zeitdauer verwendet werden.

Alternativ können die Kompensationsparameter P1* dadurch ermittelt werden, dass an dem jeweiligen Umkehrpunkt Amp als Betragsmaximum von $Kv \cdot eX(t)$ festgelegt wird; die Verzögerungszeit und die Haltezeit Th gleich null gesetzt werden $Tt = Th = 0;$ und die Abklingzeit $Td$ als die Zeitdauer zwischen Zeitpunkten $T\_eX\_max$ und $T\_eX\_30,$ wobei $T\_eX\_max$ ein Zeitpunkt, an dem $Kv \cdot eX(t) = Amp$ ist, und $T\_eX\_30$ ein Zeitpunkt, ab welchem $Kv \cdot eX(t)$ sich in einem Intervall $0,3 \cdot Amp$ bewegt.

Führen bereits die Kompensationsparameter P1* zu sehr guten Kompensationsergebnissen, kann die Ermittlung beendet und die Kompensationsparameter P1* übernommen werden und beispielsweise in der Recheneinrichtung RE und/oder in der Servoantrieb-Regeleinrichtung SRE gespeichert werden - Schritt $S_E$.

Um Kompensationsparameter P2* zu ermitteln, die zu noch besseren Ergebnissen führen, kann in Schritt S5 ein zweiter Testparametersatz P2 bereitgestellt werden. Der zweite Testparametersatz P2 kann beispielsweise per manuelle Eingabe über eine Benutzer-Schnittstelle der Komponente CP bereitgestellt werden. Die Komponente CP kann den zweiten Testparametersatz P2 (nach bestimmten Vorgaben) auch automatisch generieren.

Der zweite Testparametersatz P2 unterscheidet sich von dem ersten Testparametersatz P1, sodass sich daraus generierte Test-Kompensationssignale unterscheiden. Vorzugsweise besteht der zweite Testparametersatz P2 aus den in Schritten S1 bis S4 ermittelten Kompensationsparametern P1*.

In Schritt S6 führt die Komponente CP den ersten Testparametersatz P1 der Servoantrieb-Regeleinrichtung SRE zu und veranlasst diese, dasselbe Messszenario aber anhand des zweiten Testparametersatzes P2 durchzuführen (zweite Messung). Der zweite Testparametersatz P2 kann beispielsweise aus den ermittelten Kompensationsparametern P1* bestehen.

Falls notwendig kann die Komponente CP der Servoantrieb-Regeleinrichtung SRE auch die Sollwerte SW zuführen oder das Durchführen des Messszenarios durch ein einfaches Signal an die Servoantrieb-Regeleinrichtung SRE, z.B. wie oben erwähnt, durch ein boolesches Signal anstoßen und/oder stoppen.

Die Servoantrieb-Regeleinrichtung SRE, vorzugsweise das Reibkompensationsmodul RKM der Servoantrieb-Regeleinrichtung SRE generiert aus dem zweiten Testparametersatz P2 ein zweites Test-Kompensationssignal K2. Anschließend führt die Servoantrieb-Regeleinrichtung SRE das Messszenario durch, bei dem der zweite Testparametersatz P2 verwendet wird. Dabei erhält die Servoantrieb-Regeleinrichtung SRE ein zweites Messsignal MS1 als Rückmeldung von der Werkzeugmaschine WZM.

Anschließend kann die Servoantrieb-Regeleinrichtung SRE das zweite Messsignal MS1 der Komponente CP der Recheneinrichtung RE zuführen.

In Schritt S7 kann die Recheneinrichtung RE aus dem zweiten Messsignal MS2 ein zweites Folgefehlersignal berechnen.

Basierend auf den beiden Test-Kompensationssignalen K1, K2 und den beiden Fehlersignalen ermittelt die Komponente CP ein Übertragungsverhaltensmodell $G_{ident}$, wobei das Übertragungsverhaltensmodell $G_{ident}$ ein Übertragungsverhalten beziehungsweise eine Beziehung zwischen einem Kompensationssignal K(t) (als Eingangssignal) und einem Fehlersignal e(t) (als Ausgangssignal) beschreibt (siehe FIG 6).

Das Übertragungsverhaltensmodell $G_{ident}$ kann beispielsweise durch ein geeignetes Identifikationsverfahren für dynamische Systeme bestimmt werden.

In einer Ausführungsform kann ein multiplikativer Zusammenhang zwischen dem Übertragungsverhaltensmodell und der oben betrachteten Übertragungsfunktion des geschlossenen Lageregelkreises bestehen.

Beispielsweise kann die Berechnung/Bestimmung des Übertragungsverhaltensmodells $G_{ident}$ wie folgt erfolgen. Zunächst wird ein Differenzsignal $vKompDiff(t)$ zwischen dem ersten Kompensationssignal K1 und dem zweiten Kompensationssignal K2 berechnet. Danach erfolgt eine Berechnung des Differenzsignals $eXDiff(t)$ zwischen dem ersten Messsignal MS1 und dem zweiten Messsignal MS2, die beispielsweise als Ist-Positionssignale ausgebildet sind, oder eine Berechnung einer Differenz zwischen dem ersten und dem zweiten Fehlersignal. Anschließend kann das Übertragungsverhaltensmodell $G_{ident}$ beispielsweise mittels eines linearen Least-Sqaures-Verfahren für ARX-Modell (Autogressive Model with exogenous input) ermittelt werden, wobei die Kompensationssignalendifferenz $vKompDiff(t)$ als Eingangs-Signal und die Mess- oder die Fehlersignalendifferenz $eXDiff(t)$ als Ausgangs-Signal verwendet wird. Die für das ARX-Modell vorzugebenden Zähler- und Nenner-Ordnung kann durch die Einstell- beziehungsweise Algorithmus-Parameter A festgelegt werden.

Auch andere Verfahren zur Bestimmung des Übertragungsverhaltensmodells $G_{ident}$ sind denkbar, die basierend auf zusammengehörigen Datensätzen oder Messungen des zeitlichen Verlaufs der Eingangs- und Ausgangssignale eines dynamischen Systems Struktur und Parameter eines geeigneten mathematischen Modells, welches das statische und/oder dynamische Verhalten des untersuchten Systems hinreichend genau beschreibt.

Das Übertragungsverhaltensmodell $G_{ident}$ kann beispielsweise als eine zeitdiskrete Übertragungsfunktion ausgebildet sein.

In Schritt S8 werden die Kompensationsparameter P2* anhand des Übertragungsverhaltensmodells $G_{ident}$ ermittelt.

Dabei kann eine Minimierung eines Gütewerts erfolgen, welcher sich sowohl auf das erste Fehlersignal, z.B. eX(t), als auch auf ein simuliertes Fehlersignal bezieht, wobei das simulierte Fehlersignal durch Anwenden des Übertragungsverhaltensmodells $G_{ident}$ auf einen (variierbaren) Kompensationsverlauf erhalten wird. Durch Variieren der den Kompensationsverlauf definierenden Parameter wird angestrebt, das simulierte Fehlersignal mit dem ersten Fehlersignal in Deckung zu bringen.

Wie bereits erwähnt, ist die Optimierung nicht auf das erste Fehlersignal als Ziel beschränkt. Im Allgemeinen kann ein Gütewert, der sich auf ein vorgegebenes Fehlersignal und auf ein simuliertes (Fehler-)Signal bezieht, optimiert werden. Dabei wird, um das simulierte (Fehler-)Signal zu erhalten, das Übertragungsverhaltensmodell $G_{ident}$ auf einen (beliebigen) Kompensationsverlauf angewandt. Das simulierte (Fehler-)Signal bildet somit den Anfangspunkt für die Optimierung. Als vorgegebenes Fehlersignal kann das erste oder auch das zweite Fehlersignal verwendet werden. Die Verwendung des ersten Fehlersignals kann allerdings zu besseren Ergebnissen führen.

Mit anderen Worten können die Kompensationsparameter P2* anhand des Übertragungsverhaltensmodells $G_{ident}$ wie folgt ermittelt werden (z.B. die Komponente CP kann dies durchführen). Zunächst wird aus beliebigen Kompensationsparametern (Anfangswerte für die Optimierung) ein Kompensationsverlauf erzeugt. Anschließend wird dieser Kompensationsverlauf als Eingang des Übertragungsverhaltensmodells $G_{ident}$ verwendet, um das simulierte Fehlersignal zu erzeugen. In einem weiteren Schritt wird ein Gütewert, der sich auf eine Differenz zwischen dem simulierten und dem ersten Fehlersignal bezieht, durch Variieren der Kompensationsparameter minimiert. Zur Bestimmung des Gütewerts aus dem simulierten und dem ersten Fehlersignal kann z.B. eine p-Norm bezogen auf ein vorgegebenes Zeitfenster nach Auftreten des Umkehrpunkts verwendet werden. Beispielsweise kann eine 4-Norm der Differenz zwischen $G_{ident}$ (vK (t)) und eX (t) innerhalb eines Zeitraums von 400 ms nach Auftreten eines Umkehrpunkts minimiert werden.

An dieser Stelle sei angemerkt, dass die Simulation *Gident{vK (t)}*, die die reale Messung, welche mindestens die Dauer zwischen zwei Umkehrpunkten (im Sekundenbereich, z.B. ca. 30 Sekunden) umfasst, ersetzt, in wenigen Milli-Sekunden abgeschlossen ist.

Es ist auch denkbar, eine andere p-Norm mit

$$p \in \mathbb{R},$$

$p \geq 1$ zu verwenden.

Eine getrennte Betrachtung (die Ermittlung des Übertragungsverhaltensmodells $G_{ident}$ und die nachfolgende Optimierung) der beiden Umkehrpunkte in den Zeitintervallen *T_UP1* und *T_UP2* ist vorteilhaft.

Die Operation *$G_{ident}$ (vK(t))* beschreibt z.B. die aus dem Kompensationssignal *vK (t)* und dem identifizierten Übertragungsverhalten *$G_{ident}$* berechnete Ausgangsgröße. *$G_{ident}$ (vK(t))* lässt sich beispielsweise durch ein numerisches Simulationsverfahren bestimmen. Für die Übertragungsfunktion *$G_{ident}$* lässt sich beispielsweise eine lineare Differenzengleichung angeben, aus welcher sich *Gident (vK(t))* unmittelbar bestimmen lässt. Startzustände bzw. unbekannte Vergangenheitswerte der Folge vK(t) können gleich null gesetzt werden.

Als Optimierungsverfahren zur Ermittlung der Kompensationsparameter P2* kann beispielsweise ein iteratives nichtlineares gradientenbasiertes Verfahren verwendet werden.

Als Startwerte der Optimierung können dabei die vorgenannten anhand nur einer Messung ermittelten Parameterwerte P1* verwendet werden.

Die Suchrichtung kann nach einem Quasi-Netwon-Verfahren bestimmt werden.

Der für das Quasi-Newton-Verfahren notwendige Gradient des Gütewerts bezüglich der Optimierungsvariablen (der Kompensationsparameter) kann an jedem Iterationspunkt auf Basis einer analytischen Berechnungsvorschrift ermittelt werden.

Die Schrittweite des Iterationsschritts kann mit einem iterativen eindimensionalen Suchverfahren auf Basis des goldenen Schnitts bestimmt werden.

Das Optimierungsverfahren kann Ungleichungsbeschränkungen bezüglich der Optimierungsvariablen berücksichtigen.

Als Abbruchbedingung für die Optimierung können verschiedene Kriterien, u.a. ein Grenzwert für die maximale Anzahl an Iterationen und ein Toleranzkriterium für die Gütewert-Verbesserung, verwendet werden.

In Schritt S9 kann die Komponente CP die Servoantrieb-Regeleinrichtung SRE dazu veranlassen, den Betriebsvorgang ein weiteres Mal durchzuführen und dabei die anhand des Übertragungsverhaltensmodells $G_{ident}$ ermittelten Kompensationsparameter P2* zu verwenden. Dabei generiert die Servoantrieb-Regeleinrichtung SRE das entsprechende Kompensationssignal und erhält als Rückmeldung ein drittes Messsignal MS3.

In Schritt S10 kann die Komponente CP basierend auf dem dritten Messsignal MS3 ein drittes Fehlersignal ermitteln, und das erste, das zweite und das dritte Fehlersignale vergleichen, um jene Kompensationsparameter zu wählen, welche zu dem geringsten Fehlersignal führen.

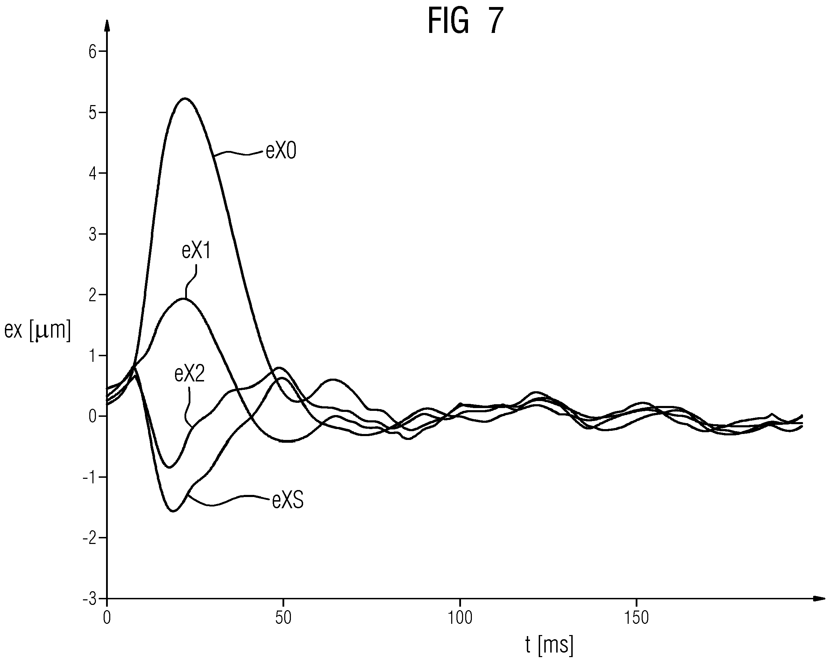

Ein Beispiel eines Ergebnisses nach Schritt S10 ist in FIG 7 veranschaulicht. In FIG 7 sind beispielhaft unterschiedliche Fehlersignale eX0, eXS, eX1, eX2 für eine translatorische Vorschubachse gezeigt, wobei eX0 das erste Fehlersignal ist, welches beispielsweise aus einer nicht vorhandenen Kompensation resultiert (Kompensationssignal = 0), eXS ein Fehlersignal mit einer Kompensation nach dem Stand der Technik, eX1 das zweite Fehlersignal und eX2 das dritte Fehlersignal, das, wie in Schritt S10 beschrieben, hinsichtlich des zweiten und des ersten Fehlersignals korrigiert wurde.

Der Verlauf der Kompensation kann ferner von der Achsstellung der Maschine abhängen. Deshalb kann es zweckmäßig sein, wenn die Parameter P, die Testparameter P1, P2 und die Kompensationsparameter P1*, P2* abhängig von der Achsstellung der Maschine ermittelt werden, wobei der Vektor X die Position der Maschinenachsen kennzeichnet. Z.B. können die Parameter *Amp, Tt, Th, Td* der entsprechenden Parametersätze von X abhängen. Insbesondere bei Abhängigkeiten von der Achsstellung X ist eine schnelle automatisierte Ermittlung der achsstellungsabhängigen Parameter von hoher Bedeutung.

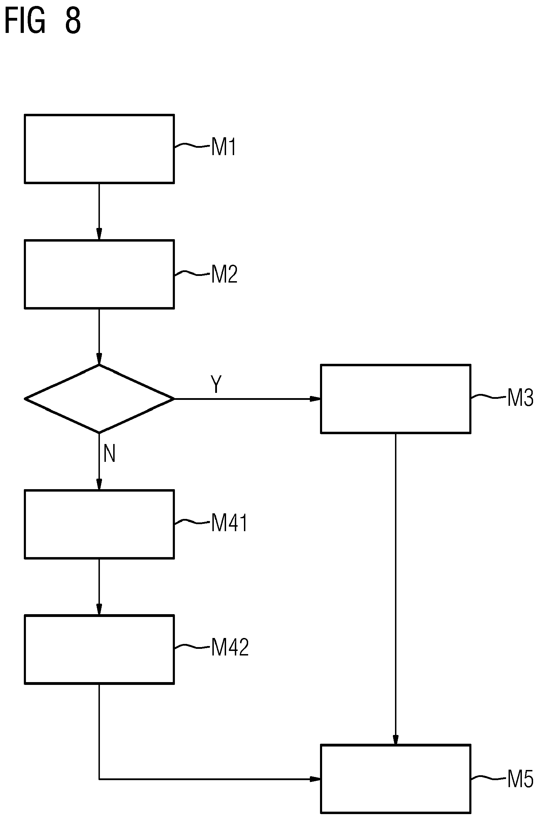

FIG 8 zeigt ein Flussdiagram, welches ein Verfahren für zustandsabhängige Wartung und/oder für Adaption an geändertes Systemverhalten veranschaulicht. Dabei wird ein Regelziel, beispielsweise die Werkzeugmaschine WZM überwacht. Das Regelziel wird im Betrieb von einer Servoantrieb-Regeleinrichtung, beispielsweise von der oben beschriebenen Servoantrieb-Regeleinrichtung SRE geregelt. Die Servoantrieb-Regeleinrichtung kann beispielsweise eine lagegeregelte Vorschubachse der Werkzeugmaschine regeln (s.o.). Die Servoantrieb-Regeleinrichtung ist dazu eingerichtet, beim Auftreten einer Störung in dem Regelziel anhand von (vorangestellten) Kompensationsparametern ein Kompensationssignal zu generieren, um die Störung zu kompensieren.

Während der Überwachung des Regelziels, beispielsweise der Maschinenachse, wird das oben beschriebene Verfahren zur Ermittlung von den (optimierten) Kompensationsparametern P1*, P2* ereignisgetriggert bzw. eventgesteuert und/oder in periodischen Zeitabständen ausgeführt - Schritt M1.

Anschließend - in Schritt M2 - werden die optimierten Kompensationsparameter P1* oder P2* mit den (vorangestellten) Kompensationsparametern verglichen.

Beim Vorliegen einer einen vordefinierten Wert (z.B. eine 10% Über- oder Unterschreitung bei Amp, Th, Tt, Td oder eines Gütewerts J) übersteigenden Abweichung der Kompensationsparameter von den optimierten Kompensationsparametern P1* oder P2* wird eine entsprechende Warnung ausgegeben - Schritt M41.

Diese Warnung kann anschließend von dem Bedienpersonal überprüft werden. Die Warnung kann auch eine Option zur Übernahme enthalten. Mit oder ohne diese Option können die optimierten Kompensationsparameter P1* oder P2* übernommen werden und die alten Parameter ersetzen - Schritt M42.

Die optimierten Kompensationsparameter P1* oder P2* können z.B. durch die Komponente CP auf der Recheneinrichtung RE oder auf der Servoantrieb-Regeleinrichtung SRE oder auch irgendwo sonst, z.B. in einer Cloud gespeichert werden.

Nach einer Übernahme der optimierten Kompensationsparameter P1* oder P2* kann die Servoantrieb-Regeleinrichtung SRE die Kompensation aufgrund dieser Parameter ausführen.

Dadurch kann eine Adaption an geändertes Systemerhalten und/oder Reibverhältnisse erfolgen.

Der Vergleich der Kompensationsparameter kann beispielsweise basierend auf entsprechenden Normgrößen, z.B. auf der vorgenannten p-Norm, und Toleranzwerten erfolgen.

Das Auslösen des Verfahrens zur Ermittlung von den optimierten Kompensationsparametern P1*, P2* kann beispielsweise nach definiertem Qualitätskriterium bei Referenzfahrt (z.B. Kreisformtest) oder bei regulärem Maschinen-Betrieb und Teilebearbeitung erfolgen (eventgetriggerte Auslösung). Ein solches Kriterium kann beispielsweise eine erhöhte Soll-Ist-Wert-Abweichung an den Achs-Umkehrpunkten. Es ist auch denkbar, dass das Verfahren in bestimmten Zeitintervallen, z.B. wöchentlich durchgeführt wird.

Das Verfahren zur Ermittlung von den optimierten Kompensationsparametern P1*, P2* kann ebenfalls bei Verschleißanalyse-Verfahren, anderen Wartungsverfahren, Condition-Monitoring-Verfahren benutzt werden.

Ist die ursprünglich eingestellte Kompensation immer noch gültig, d.h. die Unterschiede zwischen den (voreingestellten) Kompensationsparametern und den optimierten Kompensationsparametern sind (gemäß definierten Normgrößen, z.B. p-Norm, und Toleranzwerten) geringfügig, kann das System unverändert bleiben und die Kompensationsparameter P1*, P2* werden nicht übernommen - Schritt M3.

In Schritt M5 kann eine Speicherung von Zwischenwerten, Kompensationswerten, Gütemaßen beispielsweise zur Trenderkennung und zur weiteren Analyse erfolgen.

Obwohl die Erfindung im Detail durch Ausführungsbeispiele näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen. Insbesondere können die im Zusammenhang mit dem Verfahren beschriebenen Merkmale auch bei dem gezeigten System von Einrichtungen und Vorrichtungen zum Einsatz kommen bzw. diese vervollständigen und *vice versa.*

Zusammenfassend wird in dieser Offenbarung ein Verfahren vorgestellt, das im Rahmen eines Inbetriebnahme-Programms (PC-oder HMI-basiert) eine schnelle und im Sinn der Positioniergüte gute Wahl der Kompensationsparameter der oben beschriebenen Kompensation, insbesondere Reibkompensation erlaubt.

**Patentansprüche**

1. Verfahren zum Ermitteln von Kompensationsparametern (P1*), wobei die Kompensationsparameter (P1*) ein Kompensationssignal (K1*) festlegen, wobei das Kompensationssignal (K1*) dazu vorgesehen ist, zumindest eine Störung zu kompensieren, wobei die zumindest eine Störung im Betrieb eines Regelziels (MOT) auftritt, wobei das Regelziel (MOT) im Betrieb von einer Servoantrieb-Regeleinrichtung (SRE) geregelt wird, wobei die Servoantrieb-Regeleinrichtung (SRE) dazu eingerichtet ist, beim Auftreten der zumindest einen Störung anhand der Kompensationsparameter (P1*) das Kompensationssignal (K1*) zu generieren, um einen auf die Störung zurückzuführenden Folgefehler zu reduzieren,

**dadurch gekennzeichnet , dass**

- ein erster Testparametersatz (P1) bereitgestellt wird,
- die Servoantrieb-Regeleinrichtung (SRE) veranlasst wird, einen Betriebsvorgang, bei dem die zumindest eine Störung auftritt, durchzuführen, wobei die Servoantrieb-Regeleinrichtung (SRE) bei dem Durchführen des Betriebsvorgangs basierend auf dem ersten Testparametersatz (P1) ein erstes Test-Kompensationssignal (K1) generiert und als Rückmeldung ein erstes Messsignal (MS1) erhält,
- aus dem ersten Messsignal (MS1) ein erstes Fehlersignal (eX(t)) ermittelt wird,
- die Kompensationsparameter (P1*) mittels eines Ersatzmodells (EM), wobei das Ersatzmodell (EM) Fehlersignale auf Kompensationssignale abbildet, und unter Verwendung des ersten Fehlersignals (eX(t)) ermittelt werden.

2. Verfahren nach Anspruch 1, wobei die Kompensationsparameter (P1*) anhand eines durch das Ersatzmodell (EM) auf ein Kompensationssignal abgebildeten ersten Fehlersignals (eX(t)) bestimmt werden.

3. Verfahren nach Anspruch 2, wobei zum Bestimmen der Kompensationsparameter (P1*) eine Differenz zwischen einem Kompensationsverlauf (Variable) und dem durch das Ersatzmodell (EM) auf ein Kompensationssignal abgebildeten ersten Fehlersignals (eX(t)) minimiert wird.

4. Verfahren nach einem der Ansprüche 1 bis 3, wobei ferner

- ein zweiter Testparametersatz (P2) bereitgestellt wird,
- die Servoantrieb-Regeleinrichtung (SRE) veranlasst wird, den Betriebsvorgang zu wiederholen, wobei die Servoantrieb-Regeleinrichtung (SRE) bei dem Wiederholen des Betriebsvorgangs basierend auf dem zweiten Testparametersatz (P2) ein zweites Test-Kompensationssignal (K2) generiert und als Rückmeldung ein zweites Messsignal (MS2) erhält, wobei sich das zweite Test-Kompensationssignal (K2) von dem Test-Kompensationssignal (K1) unterscheidet,
- aus dem zweiten Messsignal (MS2) ein zweites Fehlersignal ermittelt wird,
- auf Basis von den Test-Kompensationssignalen (K1, K2) und den Fehlersignalen ein Übertragungsverhaltensmodell (G_{ident}) ermittelt wird, wobei das Übertragungsverhaltensmodell (G_{ident}) ein Übertragungsverhalten zwischen Kompensations- und Fehlersignalen simuliert,
- die Kompensationsparameter (P2*) anhand des Übertragungsverhaltensmodells (G_{ident}) ermittelt werden.

5. Verfahren nach Anspruch 4, wobei der zweite Testparametersatz (P2) die anhand des Ersatzmodells (EM) bestimmten Kompensationsparameter (P1*) umfasst, vorzugsweise aus den anhand des Ersatzmodells (EM) bestimmten Kompensationsparametern (P1*) besteht.

6. Verfahren nach Anspruch 4 oder 5, wobei die Servoantrieb-Regeleinrichtung (SRE) veranlasst wird, den Betriebsvorgang ein weiteres Mal durchzuführen, wobei die Servoantrieb-Regeleinrichtung (SRE) ein Kompensationssignal (K2*) basierend auf den anhand des Übertragungsverhaltensmodells ermittelten Kompensationsparametern (P2*) generiert und als Rückmeldung ein drittes Messsignal (MS3) erhält, wobei basierend auf dem dritten Messsignal (MS3) ein drittes Fehlersignal ermittelt wird, wobei das erste, das zweite und das dritte Fehlersignale verglichen werden, um jene Kompensationsparameter zu wählen, welche zu dem geringsten Fehlersignal führen.

7. Verfahren nach einem der Ansprüche 1 bis 6, wobei die Störung ein Reibeffekt ist oder aufgrund eines Reibeffekts auftritt, wobei der Reibeffekt im Betrieb an zumindest einem Umkehrpunkt einer servogetriebenen Achse des Regelziels (WZM) auftritt.

8. Verfahren nach Anspruch 7, wobei der zumindest eine Umkehrpunkt ein Positions-Umkehrpunkt ist.

9. Verfahren, bei welchem

- ein Regelziel (MOT) überwacht wird, wobei das Regelziel (MOT) im Betrieb von einer Servoantrieb-Regeleinrichtung (SRE) geregelt wird, wobei die Servoantrieb-Regeleinrichtung (SRE) dazu eingerichtet ist, beim Auftreten einer Störung in dem Regelziel (MOT) anhand von Kompensationsparametern (P) ein Kompensationssignal (K) zu generieren, um die Störung zu kompensieren, wobei
- während der Überwachung ein Verfahren nach einem der Ansprüche 1 bis 8 ereignisgetriggert und/oder in periodischen Zeitabständen ausgeführt wird, um optimierte Kompensationsparameter (P1*, P2*) zu ermitteln,
- die optimierten Kompensationsparameter (P1*, P2*) mit den Kompensationsparametern (P) verglichen werden,
- beim Vorliegen einer einen vordefinierten Wert übersteigenden Abweichung der Kompensationsparameter von den optimierten Kompensationsparametern (P1*, P2*) eine Warnung ausgegeben wird.

10. Verfahren nach Anspruch 9, wobei das Verfahren ein Verschleißanalyse-Verfahren, eine Wartung, vorzugsweise eine zustandsorientierte Wartung oder Condition-Monitoring-Verfahren ist.

11. Verfahren nach Anspruch 9 oder 10, wobei beim Vorliegen einer einen vordefinierten Wert übersteigenden Abweichung der Kompensationsparameter von den optimierten Kompensationsparametern (P1*, P2*) die optimierten Kompensationsparameter (P1*, P2*) übernommen werden.

12. System umfassend eine Servoantrieb-Regeleinrichtung (SRE), ein Regelziel (MOT) und eine Recheneinrichtung (RE), wobei das Regelziel (MOT) im Betrieb von der Servoantrieb-Regeleinrichtung (SRE) geregelt wird, wobei im Betrieb des Regelziels (MOT) zumindest eine Störung auftritt, wobei die Servoantrieb-Regeleinrichtung (SRE) dazu eingerichtet ist, beim Auftreten der zumindest einen Störung ein Kompensationssignal zu generieren, um die zumindest eine Störung zu kompensieren, wobei das Kompensationssignal durch Kompensationsparameter definiert ist, wobei die Recheneinrichtung (RE) dazu konfiguriert ist, um ein Verfahren nach einem der Ansprüche 1 bis 8 oder ein Verfahren nach einem der Ansprüche 9 bis 11 auszuführen.

13. System nach Anspruch 12, wobei die Servoantrieb-Regeleinrichtung (SRE) die Recheneinrichtung (RE) umfasst.

14. Computerprogramm, umfassend Befehle, die bewirken, dass ein System nach Anspruch 12 oder 13 ein Verfahren nach einem der Ansprüche 1 bis 8 oder ein Verfahren nach einem der Ansprüche 9 bis 11 ausführt.

15. Computerlesbares Medium, auf dem das Computerprogramm (CP) nach Anspruch 14 gespeichert ist.

FIG 1

## FIG 2

## FIG 3

# FIG 4

# FIG 5

eX(t)

vK(t)

LR

RZM

Kv

x(t)

# FIG 6

K(t)

e(t)

$G_{ident}$

FIG 7

EP 4 068 025 A1

# FIG 8

**Europäisches Patentamt**
**European Patent Office**
**Office européen des brevets**

# EUROPÄISCHER RECHERCHENBERICHT

**Nummer der Anmeldung**

EP 21 16 5783

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 6 865 499 B2 (SIEMENS ENERGY & AUTOMAT [US]) 8. März 2005 (2005-03-08) * Spalte 3 - Spalte 15; Anspruch 1; Abbildung 15 * ----- | 1-15 | INV. G05B23/02 G05B19/404 |
| A | US 2019/317472 A1 (ZHI CHAO [JP] ET AL) 17. Oktober 2019 (2019-10-17) * Absatz [0031] - Absatz [0106]; Ansprüche 1-8; Abbildungen 2-6 * ----- | 1-15 | |

**RECHERCHIERTE SACHGEBIETE (IPC)**

G05B

Der vorliegende Recherchenbericht wurde für alle Patentansprüche erstellt

| Recherchenort | Abschlußdatum der Recherche | Prüfer |
|---|---|---|
| München | 11. August 2021 | Rakoczy, Tobias |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.........................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 21 16 5783

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-08-2021

| Im Recherchenbericht angeführtes Patentdokument | Datum der Veröffentlichung | Mitglied(er) der Patentfamilie | Datum der Veröffentlichung |
|---|---|---|---|
| US 6865499 B2 | 08-03-2005 | US 2003036868 A1<br>US 2004193385 A1<br>WO 02088857 A1 | 20-02-2003<br>30-09-2004<br>07-11-2002 |
| US 2019317472 A1 | 17-10-2019 | CN 110389556 A<br>DE 102019002644 A1<br>US 2019317472 A1 | 29-10-2019<br>17-10-2019<br>17-10-2019 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19841716 A1